# EUROPÄISCHE PATENTSCHRIFT

(11) **EP 1 385 906 B1**
(45) Veröffentlichungstag und Bekanntmachung des Hinweises auf die Patenterteilung: **27.04.2005**
(21) Anmeldenummer: 02737955.1
(22) Anmeldetag: 15.04.2002
(51) Int. Cl.: C08K 13/00

(54) **POLYAMID-FORMMASSEN ZUR HERSTELLUNG TRANSPARENTER FOLIEN**
POLYAMIDE MOLDING MATERIALS FOR PRODUCING TRANSPARENT FILMS
MATIERES A MOULER A BASE DE POLYAMIDE PERMETTANT DE PRODUIRE DES FILMS TRANSPARENTS

(30) Priorität: 26.04.2001 DE 10120453
(43) Veröffentlichungstag der Anmeldung: 04.02.2004
(73) Patentinhaber: Bayer Aktiengesellschaft, 51368 Leverkusen (DE)
(72) Erfinder: SCHULTE, Helmut, 47803 Krefeld (DE); GITTINGER, Andreas, 47800 Krefeld (DE); SCHERER, Cliff, 41366 Schwalmtal (DE); MAHLKE, Matthias, 41539 Dormagen (DE); MORHENN, Heinrich, 50829 Köln (DE)
(86) Internationale Anmeldenummer: PCT/EP2002/004149
(87) Internationale Veröffentlichungsnummer: WO 2002/088242

(56) Entgegenhaltungen:
- EP-A- 0 062 820
- WO-A-98/11164
- US-A- 3 755 221
- US-A- 4 694 063

## Beschreibung

Die vorliegende Erfindung betrifft Formmassen aus Polyamid/Copolyamid und einer Mischung aus anorganischem Nukleierungsmittel, Fettsäurepolyglycolester und Amidderivaten höherer Fettsäuren, die Herstellung der Mischung und die Verwendung der Mischung zur Herstellung von Folien.

Folien aus Polyamiden, meist als Mehrschichtfolien im Verbund mit Polyolefinen oder anderen Kunststoffen, haben bei der Verpackung von Lebensmitteln und anderen Produkten weite Verbreitung gefunden.

Die Herstellung der Polyamidfolien erfolgt in der Regel entweder durch Extrusion über eine Breitschlitzdüse als Flachfolie oder über eine Ringdüse als Blasfolie. Bei Mehrschichtfolien werden die verschiedenen Schichten entweder parallel zu einem Verbund extrudiert, oder es werden mehrere Folien in einem separaten Schritt miteinander verbunden.

Für die Herstellung von Flachfolien werden in der Regel Polymere des Caprolactams, bei Blasfolien auch häufig Copolyamide auf Basis von Caprolactam und anderen Monomeren wie z.B. Hexamethylendiamin-Adipat oder Isophorondiamin-Isophthalat eingesetzt. Die Comonomere sind hierbei statistisch in das Polymer eingebaut.

Es ist erwünscht, dass die aus Polyamid hergestellten Folien neben einer hohen mechanischen Festigkeit und einer guten Sauerstoffbarriere auch eine hohe Transparenz aufweisen. Bei der Herstellung der Folie ist neben einer guten Extrudierbarkeit und Stabilität auch ein gutes Wickelverhalten der frisch extrudierten Folie gefordert.

Aus EP-A 628 200 ist bekannt, dass sich die Herstellung dünner Folien von 10 bis 15 µm bei Abzugsgeschwindigkeiten > 50 m/min durch Zugabe von 0,001 bis 0,2 Gew.-% einer Suspension, welche aus 1 bis 50 Gew.-% (bezogen auf die Gesamtsuspension) eines festen anorganischen Nukleierungsmittels einer Teilchengröße < 25 µm und 50 bis 99 Gew.-% eines organischen Dispergiermittels aus der Gruppe der Polyalkylenglykole, Paraffinöle, Carbonsäureester, Organopolysiloxane, oxalkylierte Fettalkohole, oxalkylierte Alkylphenole, oxalkylierte Fettsäuren, oxalkylierte Fettsäureamide und oxalkylierte Fettaminen besteht, möglich ist.

Die nach EP-A 628 200 hergestellten Polyamide sind jedoch für Blasfolien in der Regel nicht ausreichend transparent und zeigen bezüglich des Wickelverhaltens und bei der Weiterverarbeitbarkeit auf Konfektionieranlagen Schwächen; insbesondere für die Blasfolien-Coextrusion von PA/PE-Verbundfolien über Ringdüsen sind die Polyamide nach EP-A 628 200 nicht geeignet, weil die so hergestellten Verbundfolien eine ungenügende Transparenz und eine schlechte Planlage bzw. Rollneigung zeigen.

Es bestand daher die Aufgabe, Polyamidfolien mit verbesserter Transparenz und verbessertem Wickelverhalten herzustellen.

Aufgabe war es insbesondere, Polyamide für die Folienextrusion, bevorzugt Blasfolien-Coextrusion zu entwickeln, die eine verbesserte Transparenz, eine gute Planlage, ohne Rollneigung und eine problemlose Weiterverarbeitbarkeit der so hergestellten Verbundfolien auf üblichen Konfektionier- und Verpackungsmaschinen ermöglichen.

Es wurde nun gefunden, dass sich die Transparenz von Folien durch Verwendung der erfindungsgemäßen Mischung deutlich verbessern lässt. Als weiteren positiven Effekt besitzt eine erfindungsgemäß hergestellte Folie ungewöhnlich niedrige Haft- und Gleitreibungswerte, so dass sie sich nach der Herstellung besser flachlegen und aufwickeln lässt sowie bei der Weiterverarbeitung auf den Konfektionieranlagen besser handhaben lässt.

Gegenstand der Anmeldung sind Formmassen enthaltend
A) Polyamid-6 und/oder Copolyamide, die aus mindestens 80 Gew.-% Caprolactameinheiten bestehen, und 50 bis 5000 ppm, bevorzugt 500 bis 2 000 ppm, (bezogen auf Masse Polyamid und Copolyamid) einer
B) Mischung, enthaltend
   a) anorganisches Nucleierungsmittel,
   b) Fettsäurepolyglykolester,
      bestehend aus
      Carbonsäurekomponenten, die aus gesättigten oder ungesättigten Fettsäuren mit Kettenlänge C₄-C₂₀, bevorzugt C₁₄, besonders bevorzugt Myristinsäure aufgebaut sind, und
      Alkoholkomponenten aus Polyglycolen (CH₂CH₂O)ₙ mit n>1,
   c) Amidderivate höherer Fettsäure,
      bestehend aus
      Carbonsäurekomponenten, die aus gesättigten und ungesättigten Fettsäuren mit Kettenlänge C₄-C₂₀, bevorzugt C₁₈, besonders bevorzugt Stearinsäure aufgebaut sind, und
      Aminkomponenten, die aus aliphatischem Monoamin mit Kohlenstoffkettenlänge C₂-C₁₂ oder bevorzugt aliphatisches Diamin mit Kohlenstoffkettenlänge C₂-C₆, bevorzugt C₂, besonders bevorzugt Ethylendiamin aufgebaut sind.
      Besonders bevorzugt ist für c) Ethylendiaminbisstearylamid.

Weiterer Gegenstand sind erfindungsgemäße Formmassen, wobei A) ein Copolyamid aus Polyamid-6 und statistisch einpolymerisierten 2 - 12, bevorzugt 3 - 8, speziell 6 - 7 Gewichtsprozent äquimolaren IPD/IPA, oder ein Copolyamid aus Polyamid 6 und statistisch einpolymerisierten 8 - 20, bevorzugt 12 - 18, speziell 15 Gewichtsprozent Polyamid 66 darstellt.

Die Mischung B) (bezogen auf die Gesamtmasse der Formmasse) enthält bevorzugt
50-500 ppm, besonders bevorzugt 50-200 ppm a),
100-1000 ppm, besonders bevorzugt 200-500 ppm b)
und 100-1000 ppm, besonders bevorzugt 300-900 ppm c).

Bevorzugt enthält Mischung B
a) Talkum
b) ethoxilierte Myristinsäure (z.B. Genagen C 100 der Fa. Henkel)
und c) EBS (N,N'-Bisstearoylethylendiamin = [CH₃(CH₂)₁₆CON-CH₂]₂

Weiterer Gegenstand sind erfindungsgemäße Formmassen, wobei die Mischung B) zusätzlich d) Polyalkylenglylkol enthält.

Geeignete anorganische Nucleierungsmittel sind solche, die bereits zur Nucleierung von Polyamiden bekannt sind, wie z.B. Bariumsulfat, Tricalciumphosphat, CaF₂ und bevorzugt Talkum. Die Nucleierungsmittel sollen eine Teilchengröße D₉₀ von weniger als 25 µm, vorzugsweise von weniger als 10 µm haben.

Die gegebenenfalls eingesetzten Polyalkylenglykole haben die allgemeine Formel 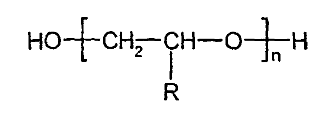 in der
- R =: H oder -CH₃ und
- n: eine ganze Zahl von 3 bis 100
bedeuten.

Vorzugsweise wird Polyethylenglykol mit einem MG von 300 bis 1000 verwendet.

Die Mischung B wird durch übliche Methoden, z.B. durch Mischen der beiden Komponenten mittels Rührer oder Dissolver, und anschließende Aufbereitung der Mischung zu einer stabilen Dispersion hergestellt. Die Aufbereitung erfolgt entweder mit einer Nassmühle, z.B. einer Rührwerksmühle, einer Kugelmühle, einer Korundscheibenmühle, einer Zahnkolloidmühle, einem Ultra-Turrax®-Dispergiergerät, einer Schwingmühle oder mit einem Ein- oder Mehrwalzenstuhl.

Die Mischung B wird vorzugsweise dem Polyamidgranulat unter Verwendung üblicher Mischgeräte, z.B. Doppelkonusmischer, Schnellmischer, Schneckenmischer, Taumelmischer oder Schaufelradmischer, zugemischt. Alternativ können vorzugsweise die Komponenten der Suspension auch getrennt auf die Oberfläche des Granulats A aufgebracht oder eingearbeitet werden.

Geeignete Polyamide für die Durchführung des erfindungsgemäßen Verfahrens sind neben Polyamid-6 Copolyamide, die durch Polykondensation bzw. Polymerisation von mindestens

| | |
|---|---|
| 80 Gew.-% | ε-Caprolactam und höchstens |
| 20 Gew.-% | eines oder mehrerer anderer polyamidbildender Ausgangsstoffe |

erhalten werden.

Beispiele für solche polyamidbildenden Ausgangsstoffe sind weitere Lactame, wie Laurinlactam, ω-Aminosäuren, wie 11-Aminoundekansäure, sowie Mischungen aus äquivalenten Mengen einer oder mehrerer Dicarbonsäuren, wie z.B. Adipinsäure, Sebazinsäure, Azelainsäure, Isophthalsäure oder Terephthalsäure, und eines oder mehrerer Diamine wie z.B. Hexamethylendiamin, 3-Aminomethyl-3,5,5-trimethylcyclohexylamin (Isophoronsäurediamin), 4,4'-Diaminodicyclohexylmethan, 4,4'-Diaminodicyclohexylpropan-(2,2), m-Xylylendiamin, 2,2,4-Trimethylhexamethylendiamin oder 2,4,4-Trimethylhexamethylendiamin. Die relative Viskosität der Polyamide, gemessen an der 1 %igen Polymer-Lösung in m-Kresol bei 25°C, sollte mindestens 3,2, vorzugsweise mindestens 3,4 betragen.

Die Polyamide werden auf übliche Weise durch hydrolytische oder aktivierte, anionische Polymerisation der Monomeren in diskontinuierlich oder kontinuierlich arbeitenden Apparaturen, z.B. Autoklaven oder VK-Rohren, hergestellt. Der Restgehalt an Monomeren und/oder Oligomeren kann gegebenenfalls durch Vakuumdestillation oder Polyamidschmelze oder durch Extraktion des aus der Polyamidschmelze gewonnenen Granulats, z.B. mit heißem Wasser, entfernt werden.

Bevorzugt ist die hydrolytische Polymerisation im Autoklaven oder 1-3 stufigen VK-Rohren mit anschließender Extraktion der Restmonomeren mit Wasser im Bereich 95-130°C und Trocknung im Schachttrockner mit N₂ oder im Taumeltrockner unter Vakuum. Die gängigen Verfahren sind den Fachleuten bekannt und in ihren Prinzipien in der einschlägigen Literatur beschrieben, zum Beispiel bei Ullmann, Encyclopedie der techn. Chemie oder Kirk Othmer, ENCYCLOPEDIA OF CHEMICAL TECHNOLOGY.

Durch Nachkondensation des Polyamid-Granulates im festen Zustand bei Temperaturen von 1 bis 100°C, vorzugsweise 5 bis 50°C, unterhalb des Schmelzpunktes des Polyamids, kann die relative Viskosität auf den gewünschten Endwert angehoben werden.

Für die Herstellung der Folien eignen sich vorzugsweise übliche Einwellenextruder mit eingängigen 3-Zonen-Schnecken oder Hochleistungsschnecken, die mit Scher- und Mischelementen bestückt sind. Die Gesamtlänge der Schnecke sollte mindestens 24 D (D = Durchmesser), besser 28 bis 33 D betragen. Die Verarbeitungstemperatur kann im allgemeinen zwischen 200 und 300°C, vorzugsweise zwischen 220°C und 260°C liegen.

Für die bevorzugten Verbundfolien wird der durch die Ringdüse extrudierte Verbundfolienschlauch mit Stützluft aufgeblasen und in der Regel über Kühlluft von außen abgekühlt. Die Polyamid-Schicht dieser Verbundfolie liegt in der Regel in der äußeren Schicht; ein bevorzugter Verbund besteht aus einer Polyethylen (PE)-Schicht auf der Schlauch-Innenseite und einer Polyamid (PA)-Schicht als Außenschicht. Weil die hier verwendeten Polyethylene und Polyamide keine natürliche Haftung eingehen, wird eine thermoplastische Haftvermittler-Schicht zwischen die PE- und PA-Schicht gefahren, so dass ein fast untrennbarer PA-X-PE-Verbund entsteht (X = Haftvermittler). Als Haftvermittler werden bevorzugt die Produkte Surlyn© 1652, Bynel© 4288 (beide von der Fa.DuPont) oder Plexar© 130 von der Fa. DSM eingesetzt.

Das erfindungsgemäße Polyamid für die PA-Schicht der Coextrusionsfolie weist eine sehr gute Transparenz und, im Verbund mit der PE-Schicht, keine oder nur sehr geringe Rollneigung der asymmetrischen PA-X-PE-Folie auf.

Weiterer Gegenstand sind die Verwendung der erfindungsgemäßen Formmassen zur Herstellung von Folien und Verwendung der Formmassen zur Herstellung von mehrschichtigen Blas-Coextrusionsfolien und Verfahren zur Herstellung von Polyamidfolien, wobei die Mischung B dem Polyamidgranulat zugemischt und/oder die Komponenten der Mischung B getrennt auf die Oberfläche des Granulates A aufgebracht oder eingearbeitet werden.

Gegenstand der Erfindung sind insbesondere Folien, hergestellt aus den erfindungsgemäßen Formmassen.

### Beispiele

### Beispiel 1

Zu einem Copolyamid aus 94 Gew.-% Caprolactam und 6 Gew.-% Isophorondiamin-Isophthalat wurden 0,18 % einer Suspension von 5,5 g Talkum in einem Gemisch von 17 g ethoxylierter Myristinsäure, 33,5 g Amidwachs und 45 g PEG 400 gleichmäßig auf das Granulat aufgegeben. Das Granulat wurden anschließend zusammen mit handelsüblichem Polyethylen zu einer 2-Schicht-Blasfolie extrudiert. Die Folie ließ sich problemlos wickeln und zeigte eine hervorragende Transparenz.

### Beispiel 2

Zu einem Copolyamid aus 94 Gew.-% Caprolactam und 6 Gew.-% Isophorondiamin-Isophthalat wurden 0,1 % einer Suspension von 9,9 g Talkum in einem Gemisch von 29,9 g ethoxylierter Myristinsäure und 60,2 g Amidwachs gleichmäßig auf das Granulat aufgegeben. Das Granulat wurden anschließend zusammen mit handelsüblichem Polyethylen zu einer 2-Schicht-Blasfolie extrudiert. Die Folie ließ sich problemlos wickeln und zeigte eine hervorragende Transparenz.

### Vergleichsbeispiel 1

Zugabe von 0,13 Gew.-% einer Suspension von 10 g Talkum und 10 g Zinkstearat in 80 g Polyethylenglykol des mittleren Molekulargewichts 400 zu einem Copolyamid. aus 94 Gew.-% Caprolactam und 6 Gew.-% Isophorondiamin-Isophthalat. Das Granulat wurden anschließend in gleicher Weise wie in Beispiel 1 und 2 zu einer 2-Schicht-Blasfolie extrudiert. Beim Wickeln zeigte die Folie eine Neigung zur Faltenbildung. Transparenz und Glanz waren schlechter als bei den Beispielen 1 und 2.

| | % Trübung | Glanzeinheit |
|---|---|---|
| Beispiel 1 | 3,2 | 141,2 |
| Beispiel 2 | 4,1 | 133,0 |
| Vergleichsbeispiel 1 | 14,3 | 77,5 |

Die Trübung wurde entsprechend ASTM D 1003 an der Polyamidschicht gemessen. Die Folie wurde zu diesem Zwecke delaminiert.

Die Glanzmessung erfolgte entsprechend DIN 67530 an der Polyamidoberfläche der Verbundfolie.

## Patentansprüche

1. Formmasse enthaltend
A) Polyamid-6 und/oder Copolyamide, die aus mindestens 80 Gew.-% Caprolactameinheiten bestehen, und 50 bis 5000 ppm (bezogen auf die Masse von Polyamid und Copolyamid) einer
B) Mischung, enthaltend
a) anorganisches Nucleierungsmittel,
b) Fettsäurepolyglykolester, bestehend aus Carbonsäurekomponenten, die aus gesättigten oder ungesättigten Fettsäuren mit Kettenlänge C₄-C₂₀ aufgebaut sind, und Alkoholkomponenten aus Polyglycolen (CH₂CH₂O)ₙ mit n>1,
c) Amidderivate höherer Fettsäure, bestehend aus Carbonsäurekomponenten, die aus gesättigten und ungesättigten Fettsäuren mit Kettenlänge C₄-C₂₀ aufgebaut sind, und Aminkomponenten, die aus aliphatischem Monoamin mit Kohlenstoffkettenlänge C₂-C₁₂ oder aliphatisches Diamin mit Kohlenstoffkettenlänge C₂-C₆ aufgebaut sind.

2. Formmasse gemäß Anspruch 1, wobei A) ein Copolyamid aus Polyamid-6 und statistisch einpolymerisierten 2 - 12 Gewichtsprozent äquimolaren IPD/IPA darstellt.

3. Formmasse gemäß einem oder mehreren der vorangegangenen Ansprüche, wobei A) ein Copolyamid aus Polyamid 6 und statistisch einpolymerisierten 8 - 20 Gewichtsprozent Polyamid 66 darstellt.

4. Formmasse gemäß einem oder mehreren der vorangegangenen Ansprüche, wobei die Mischung B) (bezogen auf die Gesamtmasse Formmasse) enthält:
a) 50-500 ppm, bevorzugt 50-200 ppm
b) 100-1000 ppm, bevorzugt 200-500 ppm
und c) 100-1000 ppm, bevorzugt 300-900 ppm.

5. Formmassen gemäß einem oder mehrerer der vorangegangenen Ansprüche, wobei Suspension B
a) Talkum
b) ethoxilierte Myristinsäure
c) EBS
enthält.

6. Formmasse gemäß einem oder mehrerer der vorangegangenen Ansprüche, wobei die Suspension zusätzlich d) Polyalkylenglylkol enthält.

7. Verwendung der Formmassen zur Herstellung von Folien.

8. Verwendung der Formmassen zur Herstellung von mehrschichtigen Blas-Coextrusionsfolien.

9. Verfahren zur Herstellung von Polyamidfolien, wobei die Suspension B dem Polyamidgranulat zugemischt und/oder die Komponenten der Suspension B getrennt auf die Oberfläche des Granulates A aufgebracht oder eingearbeitet werden.

10. Folien, hergestellt gemäß einem oder mehrerer der vorangegangenen Ansprüche.

## Claims

1. Moulding composition comprising
A) (co)polyamide-6 containing at least 80 wt. % caprolactam units and 50 to 5000 ppm (with respect to the weight of the (co)polyamide of
B) a mixture containing
a) an inorganic nucleating agent,
b) fatty acid polyglycol esters consisting of carboxylic acid components constructed of saturated or unsaturated fatty acids having chain length C₄-C₂₀ and alcohol components from polyglycols (CH₂CH₂O)ₙ where n>1,
c) amide derivatives of higher fatty acid consisting of carboxylic acid components constructed from saturated or unsaturated fatty acids having chain length C₄-C₂₀ and amine components constructed from aliphatic monoamine having carbon chain length C₂-C₁₂ or aliphatic diamine having carbon chain length C₂-C₆.

2. Moulding composition according to Claim 1, wherein A) is a copolyamide of polyamide-6 and 2-12 weight percent of a randomly copolymerized equimolar IPD and IPA.

3. Moulding composition according to one or more of the preceding claims, wherein A) is a copolyamide of polyamide-6 and 8-20 weight percent of a randomly copolymerized polyamide-66.

4. Moulding composition according to one or more of the preceding claims, wherein said mixture B) contains:
a) 50-500 ppm, preferably 50-200 ppm,
b) 100-1000 ppm, preferably 200-500 ppm, and
c) 100-1000 ppm, preferably 300-900 ppm, with respect to the entire moulding composition.

5. Moulding composition according to one or more of the preceding claims, wherein B is a suspension containing
a) talcum
b) ethoxylated myristic acid
c) EBS.

6. Moulding composition according to one or more of the preceding claims, wherein the suspension also contains d) polyalkylene glycol.

7. Use of the moulding compositions for producing films.

8. Use of the moulding compositions for producing multilayered bubble coextruded films.

9. Process for producing polyamide films which comprises the suspension B being admixed to the polyamide pellet and/or the components of suspension B being separately applied to the surface of pellet A or incorporated.

10. Films produced according to one or more of the preceding claims.

## Revendications

1. Matière à mouler contenant
A) du polyamide-6 et/ou des copolyamides qui consistent en au moins 80 % en masse d'unités de caprolactame, et 50 à 5000 ppm (par rapport à la masse de polyamide et de copolyamide)
B) d'un mélange contenant
a) un agent de nucléation inorganique,
b) des esters d'acides gras et de polyglycols, consistant en composants acides carboxyliques qui sont constitués par des acides gras saturés ou insaturés d'une longueur de chaîne C₄-C₂₀, et des composants alcools constitués par des polyglycols (CH₂CH₂O)ₙ avec n > 1,
c) des dérivés amides d'acides gras supérieurs, consistant en composants acides carboxyliques qui sont constitués par des acides gras saturés et insaturés d'une longueur de chaîne C₄-C₂₀, et des composants amines qui sont constitués par une monoamine aliphatique d'une longueur de chaîne carbonée C₂-C₁₂ ou une diamine aliphatique d'une longueur de chaîne carbonée C₂-C₆.

2. Matière à mouler selon la revendication 1, où A) représente un copolyamide de polyamide-6 et de 2-12 % en masse de IPD/IPA équimolaire introduit statistiquement par polymérisation.

3. Matière à mouler selon une ou plusieurs des revendications précédentes où A) représente un copolyamide de polyamide-6 et de 8-20 % en masse de polyamide 66 introduit statistiquement par polymérisation.

4. Matière à mouler selon une ou plusieurs des revendications précédentes où le mélange B) contient (par rapport à la masse totale de la matière à mouler) :
a) 50-500 ppm, de préférence 50-200 ppm,
b) 100-1000 ppm, de préférence 200-500 ppm, et
c) 100-1000 ppm, de préférence 300-900 ppm.

5. Matières à mouler selon une ou plusieurs des revendications précédentes où la suspension B contient
a) du talc,
b) de l'acide myristique éthoxylé,
c) EBS.

6. Matière à mouler selon une ou plusieurs des revendications précédentes où la suspension contient en outre d) un polyalkylèneglycol.

7. Utilisation des matières à mouler pour la production de feuilles.

8. Utilisation des matières à mouler pour la production de feuilles de coextrusion par gonflage multicouches.

9. Procédé de production de feuilles de polyamide où la suspension B est mélangée avec les granulés de polyamide et/ou les composants de la suspension B sont appliqués ou incorporés séparément sur la surface des granulés A.

10. Feuilles produites selon une ou plusieurs des revendications précédentes.
